# EUROPEAN PATENT APPLICATION

(11) **EP 4 506 391 A1**
(43) Date of publication of application: **12.02.2025**
(21) Application number: 22933902.3
(22) Date of filing: 23.11.2022
(51) Int. Cl.: C08G 63/78, B01J 19/18, B01J 3/00, B01J 19/20

(54) **EQUIPMENT FOR AUTOMATIC POLYMERISATION OF POLYCONDENSATION POLYMERS AND OTHER POLYURETHANE SYSTEMS AND METHOD**

(30) Priority: 01.04.2022 BR 102022006404; 18.10.2022 BR 102022021112
(71) Applicant: Joaquim Antunes Quevedo, Edson, 06465-136 Barueri (BR); Silva de Araujo, Henrique, 13272-554 Valinhos (BR)
(72) Inventor: Joaquim Antunes Quevedo, Edson, 06465-136 Barueri (BR); Silva de Araujo, Henrique, 13272-554 Valinhos (BR)
(74) Representative: Wunderlich & Heim Patentanwälte PartG mbB
(86) International application number: PCT/BR2022/050459
(87) International publication number: WO 2023/183998

(57) **Abstract**

Equipment for automatic polymerization of polycondensation polymers and other polyurethane systems and method showing equipment (E) capable of mixing inputs in a controlled manner with regard to quantities, temperatures, stirring/mixing and reaction times, resulting in polymers for different purposes, including polycondensation polymers and polyurethanes, and also an operation method of said equipment (E) with regard to programming and execution of recipes.

## Description

### Field of the Application

The present invention relates to an innovative autonomous equipment for polymerization of polycondensation polymers aiming to disclose an equipment capable of reproducing different polymer recipes, these being pre-programmed, and said reproduction being able to be performed continuously or semi-continuously, wherein said equipment has as its main objective to have a compact and adaptable configuration for in situ production, that is, the polymers are produced in the same place where they will be consumed, replacing the traditional configurations that occupy an excessively large area in specific production plants.

The present invention also relates to a method of operating said autonomous equipment for polymerizing polycondensation polymers aiming to disclose a methodology for controlling all variables of the recipe to be produced, as well as having two operating interfaces, one for the operator responsible for executing the selected recipe, and another interface dedicated to the person responsible for creating recipes and managing them.

### Background of the Invention

As professionals involved in the polymer preparation industry are well aware, the polymerization step of polymers is vital to obtaining a product with outstanding qualities. Polymerization is nothing more than the chemical process whereby polymers are formed through the combination of monomers.

In particular, polymerization to form polyurethanes is an exception among other polymerization processes since they are exothermic reactions between isocyanates and hydroxylated and/or amine compounds tending to generate substantial amounts of heat and, in many cases, thermal control is the main factor in avoiding out-of-control reactions. Out-of-control reactions can generate extremely toxic and undesirable by-products and can cause flammability and explosion problems (in the case of solvent-based polymers), as well as quality problems in the polymers, especially changed color and polydispersity, among others. Therefore, thermal control tends to be one of the main limiting factors for addition and polymerization reaction times in industrial processes.

Typically, in industrial applications, the polymerization of polyurethane intended for use as polycondensed polymers involves medium-large plants, since such plants need to comprise one or more reactors and a whole set of peripherals such as heating systems, cooling towers and chillers, power plants, heat exchangers, inerting systems and tanks for storage of intermediates, since the manufacture of such polycondensation polymers occurs in pre-defined sequential steps, such production plants require large areas for more efficient control of the resulting reactions and a high demand for operational labor, as the entire range of manufactured products are conducted by operation assisted by production operators who conduct process recipes for each product manufactured in these multipurpose reactors.

This scenario is characterized by an economic and often environmental problem, since small and medium-sized companies do not have the resources to implement such plants, and companies that do have the resources necessary for such plants need large areas of land to implement them. In addition, many limitations in processes and conversion times arise from using large multipurpose reactors for a diverse range of products, wherein all processes need to be adapted to the limited conditions of this equipment, as well as the high operational demand also tends to generate longer process times, since all controls, input loading, product unloading, temperature controls, etc., depend on human action, even if the production plant's internal measurement and transfer systems are automated. In other words, the operator needs to follow the recipe.

In order to facilitate access to equipment for polymerizing polycondensation polymers, the prior art discloses a series of solutions aiming to alleviate the technical problems mentioned, such as CN109173965, in the abstract of which an apparatus and a method for the continuous and closed production of emulsion process paste resin are presented and relates to the technical field of paste resin production. The apparatus comprises an auxiliary preparation tank group and at least one polymerization boiler; the auxiliary preparation tank group comprises several auxiliary preparation tanks, the auxiliary preparation tanks are communicated with the at least one polymerization boiler by means of feed pipes and each feed pipe is provided with a flow measuring device; and each polymerization boiler is provided with automatic cleaning devices for cleaning the inner wall of the corresponding polymerization boiler. The objective of the invention is to provide the apparatus and the method for the continuous and closed production of emulsion process paste resin. The apparatus and method can perform automatic cleaning of the boiler and improve the preparation and addition methods of assistants, and it can solve the problems of traditional emulsion process of paste resin polymerization in safety, environmental protection, occupational health, automatic degree, consumption, cost, and labor intensity.

The idea of CN109173965 is to present a solution that aims to reduce the costs inherent in resin production, which can be applied to the production of polycondensation polymers. However, even though it represents a certain advance in the state of the art, such document does not describe an automatic process for polymerizing polycondensation polymers capable of reproducing predetermined recipes.

Another document aiming to solve the technical problems described is patent document CA2661231 that teaches in its abstract a process for producing polymer and, more particularly polycondensation polymer, using a recirculating closed loop reactor. In one embodiment, the reactor includes one or more mixers for mixing the feedstock with the polymerized material recirculating in the reactor. In another embodiment, a planetary roller extruder (PRE) can be used for this purpose. In yet another embodiment, a combination of one or more static mixers and one or more PREs can be used.

Document CA2661231 attempts to minimize the problems associated with the technical field by using recirculation equipment containing a reactor and mixers. However, such equipment does not present a solution that aims to produce predetermined recipes for polycondensation polymers and that can adapt to several types of production demands.

Thus, it is certain that the state of the art would benefit from equipment capable of carrying out pre-programmed recipes continuously and/or semi-continuously, controlling quantities, temperatures, operating pressure, stirring/mixing and reaction times, aiming to manufacture polymers for different purposes, including polycondensation polymers, on a reduced scale for in situ application.

The state of the art would also benefit from an operating method for autonomous equipment capable of performing pre-programmed recipes continuously and/or semi-continuously, controlling quantities, temperatures, operating pressure, stirring/mixing and reaction time, aiming to manufacture polymers for different purposes, including polycondensation polymers.

### Objectives of the Invention

In order to solve the prior-art problems, it is an objective of the present invention to disclose equipment for the production of polymers for different purposes, including polycondensation polymers, polyurethanes, and their typical intermediate polymers capable of conducting pre-programmed recipes automatically, continuously, and/or semi-continuously.

Another objective of the present invention is to disclose equipment that allows for the control of quantities, temperatures, working pressure, stirring/mixing and reaction times with no action of an operator.

Another objective of the present invention is the inclusion of optimized thermal control systems, when compared to conventional systems of a polyurethane production plant, with a heat exchange area-capacity ratio different from those obtained in large-scale industrial equipment for a polycondensation polymer plant in larger volumes, thus achieving much more efficient process standards, with perfect control of exothermic reactions and less possibility of uncontrolled reactions.

It is also an objective of the present invention to disclose an equipment that allows for working above the boiling point of solvents under pressure, by means of a tool called positive pressure.

Finally, another objective of the present invention is to disclose a method of operating the equipment, which also represents a method of producing polymers in an autonomous and more efficient manner in terms of the reaction times currently established by state-of-the-art industrial processes.

### Summary of the Invention

In order to achieve the aforementioned objectives, the present invention comprises equipment for the automatic polymerization of polycondensation polymers and other polyurethane systems equipped with at least one reaction chamber, adjusted to perform the chemical reaction between species in order to produce polymers in an automated manner directly at the site of use.

The automatic polymerization equipment can contain up to five chambers depending on the demand for polymer production, enabling polymerization by condensation, and block copolymers can be obtained in specific sequences.

Furthermore, due to its multiple chamber system, the automatic polymerization equipment can have several types of arrangement thereof, whether in linear sequences, parallel and/or alternating processes, in a flexible manner and depending on the characteristics of the polymer to be obtained.

The equipment shows reactions with controlled temperature between 50 to 150 °C for polyurethanes, and 130 to 240 °C for intermediate polymers such as polyols containing hydroxyls, these ranges being the optimal reaction points in each case, since these temperature ranges provide better control of reactivity and shorter cycle times.

The equipment makes use of an external loop heat exchanger, dramatically increasing the conventional heat exchange rate of typical industrial reactors, which can function for cooling, but not limited to cooling, and can alternatively be used for heating to the desired reaction temperatures for effective temperature control and neutralization of heat generation.

The equipment also features a vessel control system designed to work at both negative and positive pressure, allowing for work at reaction temperatures above the boiling points of typical solvents used in these polyurethanes, for gains in reaction time as well as reduction of solvent losses through evaporation.

The equipment also features fully autonomous loading of raw materials and unloading of finished product with filtration, using automatic valves for product transfer, intelligent programmed software that controls the addition in steps designed according to the specific needs of each product to be produced.

To facilitate handling and reduce the frequency of raw material supply, the system can alternatively be equipped with inventory tanks. These inventory tanks can be pre-filled with all inputs, preparing the equipment for long production periods, making it more user-friendly and less dependent on the actions of an industrial operator.

The equipment also features a work system with redundancy in controlling the quantities added based on service tanks arranged above the reaction chamber system, which perform prior weighing of the inputs, immediately before each cycle, facilitating control of the addition of inputs.

Finally, the equipment for automatic polymerization of polycondensation polymers and other polyurethane systems has a process for autonomous polymerization of polycondensation polymers aiming to direct the polymerization when using the equipment.

### Brief Description of the Drawings

The subject matter of the present invention will become completely evident in its technical aspects from the detailed description that will be made based on the figures listed below, in which:

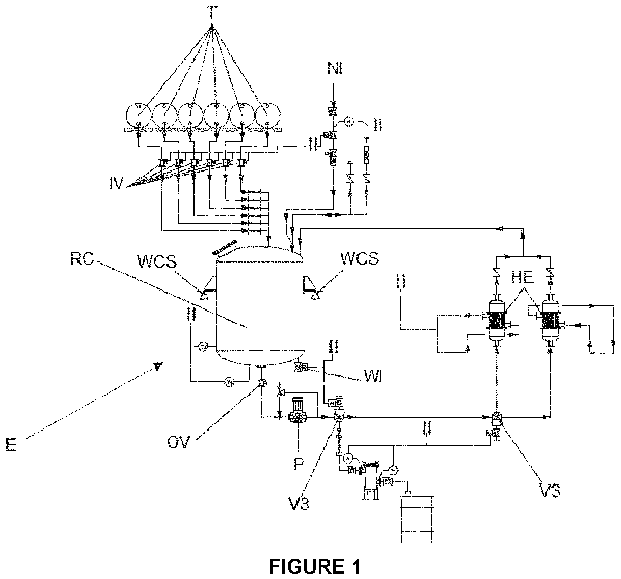

- Figure 1 shows a schematic view to illustrate the equipment for automatic polymerization of polycondensation polymers and other polyurethane systems in its configuration with a reaction chamber and five input tanks, detailing the positioning of the inlet and outlet valves, water inlet points, nitrogen inlet points and heat exchanger schematic; and

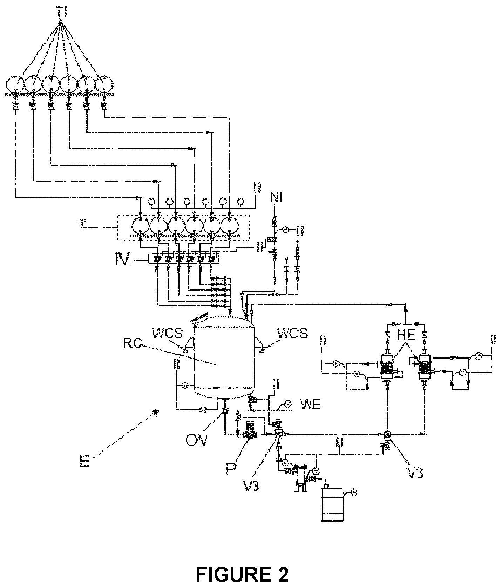

- Figure 2 shows a schematic view to illustrate the equipment for automatic polymerization of polycondensation polymers and other polyurethane systems in its configuration with a reaction chamber and five input tanks, in a variant embodiment comprising inventory tanks connected to the input tanks, detailing the positioning of the inlet and outlet valves, water inlet points, nitrogen inlet points and schematic of the heat exchanger.

### Detailed Description

In accordance with the aforementioned objectives and the figures showed, the present invention relates to an EQUIPMENT FOR AUTOMATIC POLYMERIZATION OF POLYCONDENSATION POLYMERS AND OTHER POLYURETHANE SYSTEMS, which has an equipment (E) equipped with at least one reaction chamber (RC) capable of mixing inputs in a controlled manner regarding quantities, temperatures, stirring/mixing and reaction times, resulting in polymers for different purposes, including polycondensation polymers and polyurethanes in an automatic manner.

The equipment (E) can be equipped with up to five reaction chambers (RC) enabling automatic polymerization for polymers by condensation, and block copolymers can be obtained in specific sequences. The configuration with more than one reaction chamber (RC) allows for different arrangements of the same, whether in linear sequences, parallel or alternating processes, providing the equipment (E) with flexibility, allowing it to be adjusted to the characteristics of the polymer to be obtained.

The reaction chamber (RC) is equipped with blades for mechanical mixing of the inputs inside. The reaction chambers (RC) function as reactors and have a jacket, stirring system, inlet valves (IV) at the top and at least one outlet valve (OV) at the bottom. Such reaction chambers (RC) are arranged on a platform and have a preferably cylindrical shape built in stainless steel, preferably SS-316L.

The reaction chamber (RC) also comprises a water inlet (WI), preferably positioned in its lower portion, i.e., at its bottom, controlled by a solenoid valve, as well as an inlet positioned in its upper portion for controlled nitrogen inlet. The nitrogen inlet (NI) is also controlled by means of a solenoid valve. In equipment (E), the water inlet (WI) solenoid valve, the nitrogen inlet (NI) valve and the inlet (IV) and outlet (OV) valves are controlled by the intelligent interface (II).

In the aforementioned reaction chamber (RC), the inputs are introduced through its upper portion, through the inlet valves (IV) at the top, controlled by the intelligent interface (II), leaving through the outlet valves (OV) in the lower portion of the reaction chamber (RC), being discharged into final packaging or proceeding to a next reaction chamber (RC), if the reaction in question is a sequential reaction.

The inputs, in turn, are stored in input tanks (T), with each piece of equipment having at least two input tanks (T) and up to twenty tanks (T), wherein all the raw material required for the reactions in the reaction chambers (RC) are arranged in the input tanks (T).

In an alternative configuration, in addition to the input tanks (T), the equipment (E) can be equipped with inventory tanks (IT), which allow the storage of inputs for long production periods. The input tanks (T), as well as the inventory tanks (IT) comprise quantity detection systems that communicate with the recipe programming intelligent interface (II), alerting audibly and visually as to the need to supply inputs, and interrupting the start of production cycles when there is not enough input to carry out the selected production of a given batch, until supply is carried out, thus avoiding the production of batches with quality deviations.

The equipment (E) is also equipped with a multichannel system that allows the supply of formulations containing between two and twenty different raw materials into memory, functioning as a formulation database. The purpose of the multichannel system is to condition the equipment (E) to operate based on the selection of a pre-established formulation.

In equipment (E), each reaction chamber (RC) is equipped with a weight control system (WCS) which aims to instantly control the weight and proportions of the raw material in reaction. In the weight control systems (WCS) mass flow meters or load cells (scales) can be used.

Since the purpose of the equipment (E) is to achieve a level of autonomy that allows for it to operate continuously, the weight control system (WCS) works redundantly, that is, it compares the weight of the raw materials added in the production step with the final weights obtained from the final polymer or pre-polymer, checking whether these are compatible within a variation tolerance considered acceptable.

The weight control system (WCS) aims to improve the control and quality of formulated polymers, as well as to speed up the process of adding inputs through redundancy in the control of the quantities added. Thus, the equipment (E) comprises in its weight control system (WCS) tanks called service tanks, arranged over the reaction chamber (RC) system, which are responsible for pre-weighing the inputs before the start of each cycle.

These pre-added volumes facilitate the control of the addition of inputs that are already present in quantities adequate for the production of the defined polymer, resulting in a redundant control system of additions, since later when the input is finally added to the reaction chamber (RC), it will be dosed more safely by the weight control system (WCS) and inlet valve (IV) control, being quantified again by the reaction chamber scale (RC) used for its addition to the chemical polymerization reaction system.

In a preferential aspect, the reaction chambers (RC) are constructed and designed for reactions whose optimum temperature is in the range between 50 and 120 °C for polyurethanes and 130 to 240 °C for polyols, with a reaction time of between ten minutes and three hours in each step for polyurethanes and between 10 and 24 hours for polyols, depending on the reactivity of the reacting species. Depending on the type of reagent, the reaction chamber (RC) will be equipped with a mechanical stirring shaft with a speed between twenty and sixty RPM.

The equipment (E) is also equipped with a cleaning system using a scraper anchor with Teflon (PTFE) ends, which can take the form of multiple blades (sectioned) or helical, which acts on both the cylindrical walls of the vessel and the torispherical or conical bottom, cleaning by mechanically scraping the product towards the outlet valve (OV) with the function of cleaning and/or scraping the wall of the reaction chamber (RC) at each step and avoiding the use of solvents or chemical cleaning agents between continuous cycles. The mechanical removal of raw materials or inputs optimizes the equipment (E) yield and reduces the need for cleaning or purging in systems with gas or solvent.

The equipment (E) is equipped with an intelligent interface (II) to control the operating parameters of the system as a whole. This intelligent interface (II) is provided by means of a programmable logic controller system - PLC, equipped with a recipe programming screen for preparing processes and recipes, which is controlled by: order of addition, temperatures, rotations and time between each step to allow for the reaction between the inputs, temperature control including heating and cooling and use/execution screen, where the pre-established recipes and processes are executed by the user. Furthermore, in the intelligent interface (II), it is possible to identify maintenance aspects of the equipment (E), such as the introduction of cleaning cycles and identification for changing the filter element.

The equipment (E) is also equipped with an alarm system for rapid identification of anomalies in the system such as lack of raw material, excess of raw material, weighing error, temperature spike, stirrer failure, high pressure in the filtration system, failure in opening the valve, among others.

The equipment (E) is also equipped with a thermal conditioning system between steps, which is performed directly in the reaction chambers (RC) or by means of passing heat exchangers (HE) positioned before, between or after the reaction chambers (RC), also controlled by the intelligent interface (II).

Equipment (E), in order to avoid contamination, has an automatic process for distilling solvents in its cleaning system and also a discharge line independent of the finished product discharge line, in order to dispose of dirty solvents in a separate tank.

The equipment (E) also comprises a heat exchanger (HE) system responsible for optimizing the thermal control of exothermic reactions, thus minimizing the possibility of uncontrolled reactions. The best heat exchange capacity of the equipment (E) is obtained by the volume/area ratio of the reaction chamber (RC) wall and by using an external heat exchange accessory, i.e., the heat exchanger (HE) that operates in a loop with the reaction chamber (RC), where the polymerizing material is directly kept in circulation during the critical steps of addition of exothermic ingredients, significantly increasing the typical heat capacity/product volume ratio.

The presence of a heat exchanger (HE) is key to ensuring that exothermic reactions are conducted at temperatures much closer to the maximum limits without the same risks of affecting the quality of the polymers obtained, or the safety of the operation, since in conventional vessels containing tons of products and limited temperature control capacity (kcal/h) due to the volume produced per batch, it is necessary to conduct reactions at temperatures below the limit temperatures to avoid damage in the event of out-of-control exothermic reactions, or even reduce the rate of addition of reactive ingredients to allow for the cooling system to maintain the temperature within the standard defined by the recipe. This occurs because the volumes are large, and the supply of heat exchange is limited. In equipment (E), this logic is reversed, since the thermal control optimizes such heat exchanges based on the design and its specific accessories and can work safely at temperatures much closer to the technical limits, resulting in much faster and more efficient polymerization reaction times, with greater uniformity, polydispersity and operational safety.

The heat exchanger (HE) system is equipped with an outlet below the reaction chamber (RC) with the option of aligning, via pumping by pump (P), the material in a loop with a heat exchanger (HE) positioned next to, below, or, preferably, above the reaction chamber (RC), returning the polymer to the reaction chamber (RC) from above, in order to use a circulation rate of 0.5 to 15 times the volume of the tank per minute and have an exchange area (in cm²) that ranges from 0.5 to 15 times the exchange area of the internal walls of the reaction chamber (RC). With this circulation of material in an external exchanger built with the parts in contact in SS316L or SL304 stainless steel, which can be plate, helical tube or shell-tube design, but not limited to these models, there is a gain in cooling - in these exchangers, the cooling fluid will generally be water or glycol, and a cooling fluid at room temperature or cooled by a chiller can be used, when the exchange needs are increased by the control challenge imposed by the heat release of the product are specifically greater.

For the heating option, it is possible to use the same heat exchanger (HE) and change the temperature of the thermal fluid. However, it is preferable to use two independent heat exchangers (HE): one for cooling and one for heating. The second heat exchanger (HE) alternatively works with heated fluid or steam to heat the material, which circulates to the desired temperature defined by the product recipe. The use of two heat exchangers (HE) is preferred since the exchange of fluid from cold to hot or vice versa is slower and generates energy waste. Control, when the second accessory is connected, would be done by using automatic 3-way valves (V3) that define in which line the product will circulate, heating or cooling, also controlled by the intelligent interface (II).

The equipment also features a control system and vessel designed to work under negative and positive pressure, allowing work at reaction temperatures above the boiling points of typical solvents used in these polyurethanes, for gains in reaction time as well as reduction of solvent losses through evaporation. In this control system, in reactions whose pressure is in a range between 1 and 3 pressure bars, it is possible to increase, for example, the boiling point of a polycondensation polymer containing ethyl acetate from approximately 77 °C to 110 °C, which represents a gain in reactivity, i.e., shorter reaction times. The gains may vary from case to case, according to the polymer to be produced, but we can consider gains of between 1 and 5 times in shorter reaction times compared to traditional products containing solvents.

The control system is performed by the addition of an automatic system with relief valves located in the tanks' vent, and the operation is safe due to the construction characteristics specified for the reaction chambers (RC) and their peripherals. Negative pressure is performed by the use of a vacuum pump and, although it does not apply to solvent-dispersed polymers, its use is useful to accelerate vacuum drying after cleaning cycles, removal of dissolved gases in solvent-free product reactions, as well as removal of moisture and oxygen from the unfilled fraction of the system (head-space).

The intrinsic characteristic of reaction chambers (RC) is that they are designed and built to withstand the established pressure conditions, with a minimum PMTA of 3 bars, in compliance with specific construction standards, such as ASME, and this sheet thickness specification is generated based on the PMTA informed by the manufacturer. The aforementioned reaction chambers (RC) are equipped with pressure and vacuum relief valves and controls, which in turn have a direct connection to the programmable logic controller - PLC, of the intelligent interface (II), controlling the opening and operation under the established conditions. The condensation system, formed by the reaction chamber (RC) condenser can be applied to help recover solvent losses that may evaporate, reducing losses and possible atmospheric emissions (i.e., keeping the system closed).

The present invention also presents a "METHOD FOR AUTOMATIC POLYMERIZATION OF POLYCONDENSATION POLYMERS AND OTHER POLYURETHANE SYSTEMS," and such method (100) has two segments of action, being an interface for use by a user with editing privileges (IUPE) and an interface for use by an operator (IUO).

In the interface for use by a user with editing privileges (IUPE), such user with editing privileges (UPE) will be able to perform the tasks of editing and/or deleting recipes, as well as activating the equipment (E) in order to perform a parameter test or even production of the selected recipe.

The equipment (E) is equipped with a system for remote communication via the Internet, which allows remote access to it. In this way, the user with editing privileges (UPE) can access the equipment (E) remotely, without needing to be in the same location as the equipment in question. However, the equipment (E) has a control display in the same location as its installation, and it is through this display that the interface for use by an operator (IUO) is established. In this way, the user operator (UO) cannot access the equipment (E) remotely, being necessary for him/her to be present at the location where the equipment (E) is installed.

The user with editing privileges (UPE) can define a recipe to be executed by the equipment (E) by defining the following parameters:
(i) Raw Materials;
(ii) Adding sequence;
(iii) Setting reaction steps;
(iv) Setting process threshold temperatures;
(v) Setting all critical processing variables, such as rotation, inert gas injection, pressure, or vacuum application; and
(vi) Reaction time.

In all possible definition parameters, predefined lists are offered so that the user with editing privileges (UPE) can select the parameters that best suit the execution of the recipe.

The user operator (UO), through the operator interface (IUO), has the unique possibility of executing and monitoring recipes that were created and saved in the equipment (E) by a user with editing privileges (UPE). However, warning signs regarding the execution of a recipe are visible on the equipment (E) operation screen.

When executing a recipe, the following steps are followed by the equipment (E):
(i) Supplying raw material (101);
(ii) Setting recipe and production method (102);
(iii) Manufacturing the polymer (103); and
(iv) Finishing (104).

In the raw material supply step (101), the power supplies are connected to the flexible connection components present at the top of at least one reaction chamber (RC).

In the step of defining the recipe and production method (102), all variables of interest for the recipe to be performed by the equipment (E) are included, such as addition steps, adjustments of working and reaction temperature, inert gas injection, rotation, pressure, and reaction time.

In the polymer manufacturing step (103), all parameters are determined and entered into the equipment (E) by means of the programmable logic controller - PLC, as well as all steps linked to variables such as weight (added masses), temperature delta, pressure or time elapsed in each reaction step.

Finally, in the finalization step (104), the polymerization is completed, the bottom valve opens and, with the help of a discharge pump, the product is discharged through a filtration system directly into a finished product storage tank, which may be a specific tank or even packaging such as 200L drums and/or 1000L IBCs.

Optionally, in the finalization step (104), the storage tanks can contain sensors that inform when they are full and unable to receive new products, to interrupt the start of new cycles, as well as generate a production demand, once they are at a level that supports more material.

It should be understood that the present description does not limit the application to the details described herein and that the invention is capable of other embodiments and of being practiced or performed in a variety of ways within the scope of the claims. Although specific terms have been used, such terms are to be construed in a generic and descriptive sense and not for the purpose of limitation.

## Claims

1. An **EQUIPMENT FOR AUTOMATIC POLYMERIZATION OF POLYCONDENSATION POLYMERS AND OTHER POLYURETHANE SYSTEMS,** in which an equipment (E) performs the mixing of inputs in a controlled manner with regard to quantities, temperatures, stirring/mixing and reaction times, in which the equipment is ***characterized in that*** it comprises:
- at least one reaction chamber (RC), responsible for the automatic polymerization of polymers by condensation, equipped with blades, jacket, stirring system, inlet valves (IV) at the top, at least one outlet valve (OV) at the bottom, water inlet (WI), nitrogen inlet (NI);
- at least two input tanks (T) for each reaction chamber (RC), where each raw material required for the reaction is stored;
- a multichannel system that allows the supply in memory of formulations containing between two and twenty different raw materials;
- a weight control system (WCS), for each reaction chamber (RC), responsible for instantly controlling the weight and proportions of raw material in reaction, comprising mass flow meters or load cells;
- a cleaning system, for each reaction chamber (RC), comprising a scraper anchor with Teflon (PTFE) ends, which may take the form of multiple blades (sectioned) or helical, which acts on both the cylindrical walls of the vessel and the bottom, performing mechanical cleaning/scraping of the product towards the outlet valve (OV);
- an intelligent interface (II) to control the operating parameters of the system as a whole through a programmable logic controller system - PLC, equipped with a recipe programming screen for preparing processes and recipes;
- a thermal conditioning system between steps, which is performed directly in the reaction chambers (RC) or by at least one through-flow heat exchanger (HE) positioned before, between or after at least one reaction chamber (RC), comprising automatic 3-way valves (V3) controlling in which line the product will circulate; and
- a reaction chamber (RC) control system sized to work at negative and positive pressure, allowing for work at reaction temperatures above the boiling points of typical solvents used in these polyurethanes.

2. The **EQUIPMENT,** according to claim 1, ***characterized in that*** the equipment (E) can comprise up to five reaction chambers (RC) being arranged in linear sequences, parallel or alternating processes, in a preferably cylindrical shape, built in stainless steel, preferably SS-316L, with a minimum PTMA of 3 bars, wherein said reaction chambers (RC) are built and designed for reactions whose optimum temperature is in the range between 50 and 120 °C and with a reaction time between ten minutes and three hours in each step, depending on the reactivity of the reacting species and, depending on the type of reagent, the reaction chamber (RC) will be equipped with a mechanical stirring shaft with a speed between twenty and sixty RPM.

3. The **EQUIPMENT,** according to claim 1, ***characterized in that*** in the weight control system (WCS) mass flow meters or load cells can be used, operating redundantly comparing the weight of the raw materials added in the production step with the final weights obtained from the final polymer or prepolymer, checking whether these are compatible from a variation tolerance considered acceptable.

4. The **EQUIPMENT,** according to claim 1, ***characterized in that*** the parameters controlled by the intelligent interface (II) are controlled by: order of addition, temperatures, rotations and time between each step to allow the reaction between the inputs, temperature control including heating and cooling and use/execution screen, and it is also possible to identify maintenance aspects of the equipment (E), wherein said intelligent interface (II) controls the inlet valves (IV), the outlet valves (OV), the weight control system (WCS), the water inlet (WI), the nitrogen inlet (NI), the heat exchangers (HE) and the automatic 3-way valves, as well as the intelligent interface (II) also controls an alarm system for rapid identification of anomalies in the system such as lack of raw material, excess of raw material, weighing error, temperature spike, stirrer failure and valve opening failure.

5. The **EQUIPMENT,** according to claim 1, ***characterized in that*** the heat exchanger (HE) operates in a loop form with the reaction chamber (RC), where the polymerizing material is directly kept in circulation during the critical steps of additions of exothermic ingredients, significantly increasing the typical ratio of thermal capacity/product volume, wherein the heat exchanger system (HE) is equipped with an outlet below the reaction chamber (RC) with the option of aligning, via pumping, the material in a loop with a heat exchanger (HE) positioned next to, below, or, preferably, above the reaction chamber (RC), returning the polymer to the reaction chamber (RC) from above, using a circulation rate of 0.5 to 15 times the volume of the reaction chamber (RC) per minute and an exchange area between 0.5 and 15 times the exchange area of the internal walls of the reaction chamber (RC).

6. The **EQUIPMENT,** according to claim 5, ***characterized in that*** the heat exchanger system (HE) can be of the plate, helical tube or shell-tube type, the cooling fluid being water or glycol, and a cooling fluid at room temperature or cooled by a chiller can be used, wherein two heat exchangers (HE) can be used, one for heating and the other for cooling, and the control, in this configuration, is performed by automatic 3-way valves (V3) defining whether the product will circulate in the heating line or in the cooling line.

7. The **EQUIPMENT,** according to claim 1, ***characterized in that*** the control system is performed by the addition of an automatic system with relief valves located in the tanks' vent, with the negative pressure being performed by using a vacuum pump.

8. The **EQUIPMENT,** according to claim 1, ***characterized in that*** in an alternative configuration the equipment (E) is equipped with inventory tanks for storing inputs, connected directly to the input tanks (T).

9. **A METHOD OF OPERATING THE EQUIPMENT FOR AUTOMATIC POLYMERIZATION OF POLYCONDENSATION POLYMERS AND OTHER POLYURETHANE SYSTEMS,** based on the equipment described in any one of claims 1 to 8, ***characterized in that*** the equipment (1) has a method (100) presenting two operating segments, one being an interface for use by a user with editing privileges (IUPE) and one interface for use by an operator (IUO), wherein:
in the interface for use by a user with editing privileges (IUPE), the user with editing privileges (UPE) will be able to perform the tasks of editing and/or deleting recipes, as well as activating the equipment (E) to test parameters or produce the selected recipe;
in which a user with editing privileges (UPE) can define a recipe to be executed by the equipment (E) based on the definition of the following parameters:
(i) Raw materials;
(ii) Adding sequence;
(iii) Setting reaction steps;
(iv) Setting process threshold temperatures; and
(v) Reaction time;
whereby the user operator (UO), through the operator using interface (IUO), executes and monitors the recipes that were created and saved in the equipment (E) through a user with editing privileges (UPE), wherein the warning signs regarding the execution of a recipe are visible on the equipment (E) operating screen;
wherein the execution of a recipe follows the next steps by the equipment (E):
(i) Supply of raw materials (101);
(ii) Setting of the recipe and production method (102);
(iii) Polymer manufacturing (103); and
(iv) Finishing (104).

10. The **METHOD,** according to claim 9, ***characterized in that*** all parameters are defined through predefined lists so that the user with editing privileges (UPE) can select them.

11. The **METHOD,** according to claim 9, ***characterized in that*** in the raw material supply step (101), the power supplies are connected to the flexible connection components present at the top of at least one reaction chamber (RC).

12. The **METHOD,** according to claim 9, ***characterized in that*** in the step of defining the recipe and production method (102), all variables of interest of the recipe to be performed by the equipment (E) are included, such as addition steps, adjustments of working and reaction temperature, rotation and pressure, and reaction time.

13. The **METHOD,** according to claim 9, ***characterized in that*** in the polymer manufacturing step (103), all parameters are determined and placed in the equipment (E) by means of the programmable logic controller - PLC, as well as all steps linked to variables such as weight (added masses), temperature delta, pressure or time elapsed in each reaction step are performed.

14. The **METHOD,** according to claim 9, ***characterized in that*** in the finishing step (104), the polymerization is finished, the bottom valve opens and with the aid of a discharge pump, the product is discharged passing through a filtration system directly into a finished product storage tank, which may be a specific tank or even packaging such as 200 L drums and/or 1000 L IBCs.

15. The **METHOD,** according to claim 14, ***characterized in that*** in the finishing step (104) the storage tanks may contain sensors that inform when they are full and with no capacity to receive new products, to interrupt the start of new cycles, as well as may generate a production demand once they are at a level that supports more material.
